# EUROPEAN PATENT SPECIFICATION

(11) **EP 2 212 260 B1**
(45) Date of publication and mention of the grant of the patent: **01.04.2015**
(21) Application number: 08847034.9
(22) Date of filing: 27.10.2008
(51) Int. Cl.: C04B 28/32, C09K 5/06, C09K 21/02, C04B 111/28, C04B 24/02, C04B 14/30

(54) **HEAT STORAGE COMPOSITIONS AND THEIR MANUFACTURE**
WÄRMESPEICHERUNGSZUSAMMENSETZUNGEN UND IHRE HERSTELLUNG
COMPOSITIONS DE STOCKAGE THERMIQUE ET FABRICATION DE CES DERNIÈRES

(30) Priority: 07.11.2007 GB 0721847
(43) Date of publication of application: 04.08.2010
(73) Proprietor: BASF SE, 67056 Ludwigshafen (DE)
(72) Inventor: BIGGIN, Ian Stuart, East Riding of Yorkshire HU12 8HA (GB); BUTTERS, Martin Peter, West Yorkshire BD10 8NJ (GB); HOOLEY, Anne Frances, West Yorkshire WF2 0LZ (GB)
(74) Representative: Peatfield, Jeremy William
(86) International application number: PCT/EP2008/064508
(87) International publication number: WO 2009/059908

(56) References cited:
- EP-A1- 1 752 509
- EP-A2- 1 508 552
- WO-A1-2006/080346
- GB-A- 191 423 345
- DATABASE WPI Week 199411 Thomson Scientific, London, GB; AN 1994-089532 XP002519049 & JP 06 041522 A (MATSUSHITA ELECTRIC WORKS LTD) 15 February 1994 (1994-02-15) cited in the application
- ANONYMOUS: "Phase Change Materials for Eco-Cement Products?" THE TECECO TIMES NEWSLETTER, [Online] no. 23, 24 November 2002 (2002-11-24), XP002519048 Retrieved from the Internet: URL:http://www.tececo.com/files/newsletter s/Newsletter23.htm> [retrieved on 2009-03-11] cited in the application

## Description

The present invention concerns thermal energy storage compositions which incorporate organic phase change material and have improved fire retardant properties. The compositions can be incorporated into a variety of articles including for instance fibres, foams, fabrics, heating and cooling devices, and building materials.

The compositions for thermal energy storage are well known. Latent heat storage materials can be used in a variety of situations where it is important to absorb or release heat at one time and to release or absorb heat at another time. Generally a latent heat storage material may be defined as a compound, or mixture of compounds, that will reversibly undergo a modification or change of state with accompanying release or storage of latent heat. Since the change in state of a thermal energy material tends to be a change in phase, it is usual to refer to these materials as phase change materials (PCMs). Phase change materials will absorb or release heat energy during phase transitions between any of solid, liquid and vapour. Normally this will be solid to liquid, liquid to solid, liquid to vapour or vapour to liquid. Phase change materials will generally be chosen with a phase change temperature suitable for the intended application in order to regulate temperatures within a desired temperature band, protect against temperature extremes or storage of heat or cold.

There are a number of situations where it is preferable to use phase change materials in the form of particles, for instance temperature regulating fibres and fabrics, building materials, fluid dispersions for heat or cold storage or transfer etc. Particulate phase change materials used in articles such as fibres or building materials tend to be better distributed in the article, heat transfer to and from the phase change material is maximized and weakening of the article is prevented or minimized.

Liquid-vapour phase change materials tend to be unsuitable for many applications due to the large change in volume that occurs when changing phase and the impracticality of containing the vapour such that it does not readily escape.

Although inorganic thermal energy storage materials are known, such as inorganic salt hydrates, these materials can often be less favourable because, for example, they must be kept away from water due to their water solubility, they can be corrosive, they often supercool, phase transitions can occur over a broad temperature range and they tend to suffer from irreversible separation of crystallization water that is liberated on melting. Whilst there are measures that can be employed to counter some of these effects, it is often preferable to use water insoluble, organic phase change materials since they can more easily be provided in a stable, particulate form.

It is known to incorporate organic phase change materials directly into articles where latent heat storage is required. However, it is frequently desirable to utilize a particulate form of the organic phase change material, particularly within a protective shell. In this case the particles are capsules.

Care has to be taken when providing organic phase change materials for heat storage purposes to ensure an optimum combination of properties. On the one hand the organic phase change materials should desirably not be exposed due to the inherent flammability of the organic material. However, if the organic phase change material is locked away or too deeply embedded in an article especially where the thermal energy cannot reach the organic phase change material, said organic phase change material will not be able to function as effectively as a latent heat storage material.

A particular problem with using organic phase change materials for thermal energy storage is ensuring an adequate combination of latent heat storage properties but avoiding the flammability risk. Various attempts have been made to attempt to overcome this problem.

US 2003 211796 refers to the use of intumescent coating materials for flame inhibiting finishing of articles that contain microencapsulated organic latent heat storage materials. Mention is made of the use of hydroxides as fillers in the coating.

Japanese patent application 52151296 describes a mixture consisting of polyhydric alcohol, higher alcohol, inorganic hydroxide and inorganic filler. The higher alcohol does not appear to be in particulate form or that it is evenly distributed throughout the inorganic components and there is no indication that in the mixture it would function as a phase change material.

Japanese published patent application JP 01135890 describes a thermal energy storing building material which is formed by mixing pellets containing a latent heat thermal energy material in a base material and providing an incombustible thin plate on the surface of the base material.

An article by R. Benrashid et al, Journal of Fire Sciences, Vol 14, No 2, pp 128 to 143 (1996) describes the flammability of wallboards impregnated with hexadecane. Mention is made of surface treatment of the wallboards using epoxy paint containing aluminium trihydrate or magnesium hydroxide.

The above references refer to a flame proofing coating to articles containing an organic material, which in the case of US 2003 211796 and JP 01135890 is the organic phase change material. However, such a system would only provide flame protection to the extent that the coating remains intact.

US 6099894, US 6171647, and US 6270836 each describe microcapsules containing a gel coating containing a metal oxide which can be for instance magnesium oxide or aluminium oxide. However, the preparation of the gel coating seems to employ a hazardous process.

US 2006/124892 and WO 2006 062610 describe a composition comprising phase change material and one or more polymers selected from very low density polyethylene, ethylene propylene rubber, and styrene ethylene butadiene styrene polymer. The phase change material further comprises an inert powder, which can be silicate, one or more flame retardant or mixtures, has an absorption capacity of at least 50 weight%. The phase change material would appear to be within a polymeric matrix rather than being a particulate form.

Japanese published patent application 6-41,522A describes a heat storage material containing a molten mixture of a latent heat storage material such as paraffin, preferably with a polyolefin such as polyethylene, aluminium hydroxide and preferably red phosphorus. The phase change material is not in particulate form and requires that the aluminium hydroxide is distributed within the matrix of the phase change material.

Chinese published patent application CN 1927985 describes a modified paraffin phase change material incorporating a metal material such as superfine aluminium powder and a fire retardant. The metal material and fire retardant appear to be incorporated within the phase change material.

An Internet article entitled, "Phase Change Materials for Eco Cement Products" (http://www.tececo.com/files/newsletters/Newsletter23.htm) describes an idea for combining phase change material with a magnesia eco-cement. However, the form of the phase change materials is not disclosed and there is no indication of providing flame proofing for flame retardancy.

EP 1508552 describes a construction product or a substantial part of the construction product which comprises components (a) and (b). Component (a) is wood-wool chips, linked by a binder while forming a structural body of open porosity. Component (b) is at least one latent heat accumulator, encapsulated and distributed within the structural body. The latent heat accumulator may be as capsules and are said to be smaller than 1 mm and for instance having an actual particle size range over 0.005 to 0.2 mm (5 µm to 200 µm).

It is an objective of the present invention to provide a heat storage composition with improved fire retardant properties. A further objective is to provide such a composition and overcome the disadvantages of the aforementioned prior art.

According to one aspect of the invention we provide a thermal energy storage composition having improved fire retardant properties comprising:
A) particles of organic phase change material (PCM), which organic phase change material is encapsulated within a shell in the form of capsule particles, in which the volume mean diameter (VMD) of the capsule particles (when in the form of an aqueous dispersion) is between 0.2µm and 5µm,
   and
C) magnesia cement,
in which the particles of (A) organic phase change material are distributed uniformly throughout (C) magnesia cement,
in which the particles of organic phase change material (A) are enclosed within the magnesia cement component (C) and are enclosed in a matrix of the magnesia cement (C).

In a more specific form of the invention the composition comprises
A) particles of organic phase change material (PCM), and
B) particles of fire retarding magnesium hydroxide and/or aluminium hydroxide, and
C) magnesia cement.

In one form the composition of the present invention comprises both particles of organic phase change material (A) and particles of fire retarding magnesium hydroxide and/or aluminium hydroxide (B). In this form particles of component (A) and particles of component (B) desirably should be in intimate association. By this we mean that the particles of phase change material should be in close proximity to particles of the magnesium hydroxide and/or aluminium hydroxide. Preferably at least a portion of the particles of both components should be substantival in contact with each other, for instance virtual or actual contact.

The particles of the at least two components should ideally be maintained in a substantival constant ratio throughout the composition. Generally particles of components that are contained in a lesser amount will tend to be surrounded to a large extent by particles of the component(s) contained in a greater amount.

The present invention comprises particles of organic phase change material (A) and magnesia cement (C). Desirably component (A) and component (C) should be in intimate association. By this we mean that component (C) is in close proximity,for instance virtual or actual contact with component (A). Component (A) will be surrounded by component (C). In this form generally the particles of the organic phase change material will be enclosed within the magnesia cement component. Desirably in this form particles of organic phase change material will be enclosed in a matrix of the magnesia cement. Preferably the magnesia cement may form a substantially coherent matrix throughout the composition. Alternatively the composition may comprise a plurality of the magnesia cement pieces, pellets, blocks or particles each containing particles of the organic phase change material distributed throughout the magnesia cement.

In this form the particles of organic phase change material will be distributed uniformly throughout the magnesia cement. By this we mean that the particles of the two components should ideally be maintained in a substantially constant ratio throughout the composition.

A further embodiment is a composition that incorporates particles of organic phase change material (A), particles of fire retarding magnesium hydroxide and/or aluminium hydroxide (B), and magnesia cement (C). In general the particles of organic phase change material and particles of magnesium hydroxide and/or aluminium hydroxide will be intermixed in accordance with the first form of the invention. The magnesia cement will then surround both the particles of organic phase change material and particles of magnesium hydroxide and/or aluminium hydroxide. Thus the magnesia cement may form a matrix comprising particles of both components A and B. In this regard the particles from both components A and B should desirably be distributed throughout the magnesia cement, which preferably forms a coherent matrix throughout the composition.

Particles of each of components A and B may each be independently uniformly distributed throughout the magnesia cement component C. Preferably the particles organic phase change material A may be uniformly distributed throughout particles of magnesium hydroxide and/or aluminium hydroxide component B and this mixture of components A and B then uniformly distributed throughout the magnesia cement component C.

The inventive heat storage compositions and articles benefit from exhibiting improved fire retardant and/or fire resistant properties. The terms fire retardant and fire resistant are sometimes used interchangeably but often the terms imply a subtle difference in fire properties. In this invention we define fire or flame retardant to mean a material which resists burning or burns slowly and fire resistant to mean a material that resists burning to the extent it can act as a fire barrier. The term fire retardant will generally be used in this patent. It should be understood that this invention provides for both flame/fire retardant and fire resistant compositions and articles, particularly flame retardant compositions and articles.

The invention further provides a process of obtaining a thermal energy storage composition having improved fire retardant properties comprising:
A) particles of organic phase change material (PCM) which organic phase change material is encapsulated within a shell in the form of capsule particles in which the volume mean diameter (VMD) of the capsule particles (when in the form of an aqueous dispersion) is between 0.2µm and 5µm,
   which are in intimate association with
C) magnesia cement,
in which the particles of (A) organic phase change material are distributed uniformly throughout (C) magnesia cement in which the particles of organic phase change material (A) are enclosed within the magnesia cement component (C) and are enclosed in a matrix of the magnesia cement (C).

The process comprises the steps of,
I) providing the particles of organic phase change material (A) as an aqueous emulsion, aqueous dispersion, aqueous paste, damp cake or dry powder,
II) combining component (A) provided in step (I) with the materials used to prepare said component (C) magnesia cement.

In a more specific form of the invention the composition comprises
A) particles of organic phase change material (PCM), and
B) particles of fire retarding magnesium hydroxide and/or aluminium hydroxide, and
C) magnesia cement.

It is desirable to provide the organic phase change material particles (A) as an aqueous emulsion or as an aqueous dispersion and co-mix with the magnesium hydroxide and/or aluminium hydroxide (B) as an aqueous slurry. The aqueous emulsion or dispersion of component A may be added to the aqueous slurry of component B or alternatively the aqueous slurry of component B may be added to the aqueous emulsion or dispersion of component A. In either case a homogenous slurry should desirably be formed. It may be desirable to add water to dilute this slurry and optionally a dispersant may be added in order to achieve the desired viscosity, solids concentration and stability.

Alternatively the organic phase change material (A) may be provided as a powder. Desirably the powder of component A should be added to a slurry of the magnesium hydroxide and/or aluminium hydroxide to form a homogenous slurry. Water may be added to dilute this slurry and optionally dispersant can be added to provide the desired viscosity, solids concentration and stability.

In a further alternative components A and B may be mixed together to form a blended powder. Water may be added to this blended powder in order to form a slurry. And optionally a dispersant may be added in order to achieve a desired viscosity, solids concentration and stability.

It is also possible to prepare the composition of the invention by adding magnesium oxide (MgO) to an aqueous emulsion/dispersion of the organic phase change material particles (A) such that a proportion of the water reacts with some or substantially all of the oxide in order to form the corresponding hydroxide (B). The product made by this form of the process may be a slurry, paste or essentially dry product in powder or granular form by employing an additional comminution step. Again, a dispersant may be employed.

Suitable organic phase change materials are organic, water insoluble materials that undergo solid-liquid/liquid-solid phase changes at useful temperatures (typically between 0 and 80°C). Generally the enthalpy of phase change (latent heat of fusion and crystallization) is high. Suitable organic phase change materials exhibit a high enthalpy of phase change, typically >50 kJ/kg, preferably >100 kJ/kg and most preferably >150 kJ/kg when determined by Differential Scanning Calorimetry (DSC).

Suitable organic phase change materials include (but are not limited to) substantially water insoluble fatty alcohols, glycols, ethers, fatty acids, amides, fatty acid esters, linear hydrocarbons, branched hydrocarbons, cyclic hydrocarbons, halogenated hydrocarbons and mixtures of these materials. Alkanes (often referred to as paraffins), esters and alcohols are particularly preferred. Alkanes are preferably substantially n-alkanes that are most often commercially available as mixtures of substances of different chain lengths, with the major component, which can be determined by gas chromatography, between C₁₀ and C₅₀, usually between C₁₂ and C₃₂. Examples of the major component of an alkane organic phase change materials include n-octacosane, n-docosane, n-eicosane, n-octadecane, n-heptadecane, n-hexadecane, n-pentadecane and n-tetradecane. Suitable ester organic phase change materials comprise of one or more C₁ - C₁₀ alkyl esters of C₁₀ - C₂₄ fatty acids, particularly methyl esters where the major component is methyl behenate, methyl arachidate, methyl stearate, methyl palmitate, methyl myristate or methyl laurate. Suitable alcohol organic phase change materials include one or more alcohols where the major component is, for example, n-decanol, n-dodecanol, n-tetradecanol, n-hexadecanol, and n-octadecanol.

It is also possible to include a halogenated hydrocarbon along with the main organic phase change material to provide additional fire protection.

Organic phase change materials are substantially water insoluble, as this is necessary for preparing particulate forms of the organic phase change material in encapsulated form.

The present invention is particularly suitable for those organic phase change materials that are combustible and that without suitable treatment, as provided by this invention, would impact negatively on the fire properties of an article containing the organic phase change material.

Organic phase change materials are utilized in the invention in a particulate form, by which is meant in encapsulated form. For reasons discussed in more detail below, the particle size of phase change material particles should not be too large. Typically the phase change material particles are as small as possible within certain limitations. This is discussed in more detail below when considering the phase change material form.

In the invention the organic phase change material is encapsulated within a shell in the form of capsule particles. The capsule particles may be in direct contact with particles of (B) magnesium hydroxide and/or aluminium hydroxide and/or (C) magnesia cement.

Typically encapsulated organic phase change materials comprise the organic phase change material and optional additives such as a halogenated paraffin or a nucleating agent which is surrounded by a shell that is impermeable to the phase change material. Unlike free (unconstrained) particles of organic phase change material, capsule particles remain as solid particles even when the organic phase change material in the core of the capsules is in its higher energy molten state. In capsule form the organic phase change material is completely surrounded and entrapped by the shell and is protected against contamination. When the shell is robust, the organic phase change material is more securely contained and less likely to escape from the capsules and compositions comprising capsules. For this reason it is preferred to use capsules in this invention, particularly capsules that are robust. Details of the robust character of the capsules are provided below.

Since encapsulated organic phase change materials tend to be stable, solid entities, they can be provided in a broader range of particle sizes than would be possible for the aforementioned emulsified organic phase change materials. Smaller primary capsules tend to be more durable leading to inventive compositions which do not readily release organic phase change material. Due to their greater surface/volume ratio, smaller particle sizes are expected to give inventive compositions which more readily transfer heat to/from the particles of organic phase change material. It is generally possible for smaller capsules to be more uniformly distributed throughout the hydroxide particles (B) or within the cement matrix (C), leading to better fire protection than would otherwise be the case.

Capsules may conveniently be used in the form of an aqueous dispersion or dry powder.

Suitable aqueous dispersions typically comprise 30 to 60% w/w, most preferably 40 to 50% w/w microcapsules. When provided as an aqueous dispersion, the particle size of capsules of organic phase change material should be carefully considered. In addition to the benefits of smaller capsules discussed earlier, dispersions of smaller capsules tend to exhibit the favourable property of better stability (reduced capsule creaming or settling) and the unfavourable property of increased viscosity compared to a dispersion of larger sized capsules at an equivalent concentration. It is also generally more difficult to prepare suitable capsules with very small particle sizes and/or the process required is more costly due to the extra processing that is required and/or the use of more specialized equipment. A balance must be found between these advantages and disadvantages and a volume mean diameter (VMD) of capsules (when in the form of an aqueous dispersion) of between 0.2µm and 5 µm is chosen. Preferably the VMD of the capsules in an aqueous dispersion is between 0.7µm and 5 µm and more preferably between 1µm and 5µm. VMD is determined by a Sympatec Helos particle size analyzer or another technique found to give results for microcapsules that are in very good agreement with the results from a Sympatec Helos analyzer.

Capsules in a dry form may also be used in this invention. Such capsules may be obtained when an aqueous dispersion or suspension of capsules is subjected to a water removal step, which may include spray-drying, air-drying, filtration or centrifugation. It is also possible to partially remove the water to produce a paste or cake form of the capsules.

It is preferable to use the aqueous dispersion form of capsules in this invention as this usually provides the preferred smaller capsule particle sizes and, as the water removal step is avoided, at a lower cost. It is noted that typical microencapsulation processes provide an aqueous capsule dispersion as a product of the process.

The encapsulation process results in capsules with a substantially core-shell configuration. The core comprises of organic phase change material and the shell comprises of encapsulating polymeric material. Usually the capsules are substantially spherical. Preferably the shell is durable such that the organic phase change material is protected from contamination and cannot easily escape from the capsules. Thermogravimetric analysis (TGA) provides an indication of the robustness of the capsules. "Half Height" is the temperature at which 50% of the total mass of dry (water-free) capsules is lost as a fixed mass of dry capsules is heated at a constant rate. In this analysis method mass may be lost due to organic phase change material escaping as vapour permeating through the shell and/or due to rupturing of the shell. Particularly suitable microcapsules of organic phase change material (in the 1µm to 5µm mean particle size range) have a Half Height value greater than 250°C, preferably greater than 300°C and more preferably greater than 350°C, when TGA is carried out using a Perkin-Elmer Pyris 1 at a rate of 20°C per minute using typically 5 to 50 mg of dry sample.

Encapsulated organic phase change material is preferably utilized as component A in this invention and preferably has a core-shell configuration in which the primary organic phase change material (which will optionally include an additive such as a nucleating agent) is/are present in the core.

The shell that is formed around the core provides protection for and prevents loss of the primary phase change material which optionally includes an additive such as a nucleating material. The amount of shell material and amount of core material is chosen to give durable capsules containing the maximum amount of core material and hence maximum latent heat capacity. Frequently the core material forms at least 20% by weight of the capsule, preferably 50% to 98% and most preferably 85% to 95%.

Capsules may be formed by any convenient encapsulation process suitable for preparing capsules of the correct configuration and size. Various methods for making capsules have been proposed in the literature. Processes involving the entrapment of active ingredients in a matrix are described in general for instance in EP-A-356,240, EP-A-356,239, US 5,744,152 and WO 97/24178. Typical techniques for forming a polymer shell around a core are described in, for instance, GB 1,275,712, 1,475,229 and 1,507,739, DE 3,545,803 and US 3,591,090.

The encapsulation process leading to preferred core/shell capsules usually involves the formation of a dispersion of the organic phase change material (optionally including an additive such as a nucleating agent where required) in water. The organic phase change material (optionally including an additive such as a nucleating agent) is usually in a molten state, to produce droplets of a certain diameter necessary to give the desired capsule particle size prior to forming a shell around the organic phase change material. Thus, for organic phase change material in encapsulated form, it is important that the organic phase change material is substantially water insoluble. Suitable organic phase change materials include those described earlier that are substantially water insoluble.

Microcapsules of core shell configuration may be formed from a number of different types of materials including aminoplast materials, particularly using melamine and urea e.g. melamine-formaldehyde, urea-formaldehyde and urea-melamine-formaldehyde, gelatin, epoxy materials, phenolic, polyurethane, polyester, acrylic, vinyl or allylic polymers etc. WO01/54809 discloses microcapsules with acrylic copolymer shell material formed from acrylic monomers. Microcapsules whose shells are composed of formaldehyde resins or cross-linked acrylic polymer are preferred as these are usually very robust as indicated by thermogravimetric analysis. Acrylic types are particularly preferred as they are robust and do not liberate the toxic substance formaldehyde unlike capsules comprising formaldehyde resins.

Although it is not essential it is preferable to employ a nucleating agent to counter the effect known as supercooling or subcooling. Supercooling is the effect whereby the organic phase change material crystallizes at a lower temperature than would normally be expected of the bulk, non-emulsified or non-encapsulated organic phase change material. The effect is most evident when the organic phase change material is isolated in independent microscopic domains, for example in an emulsion or microencapsulated form. For example, Differential Scanning Calorimetry (DSC) of microencapsulated organic phase change materials (without nucleating agent) may show one or more crystallization peaks occurring at lower temperatures than the one or more peaks for the organic phase change material in bulk (non-encapsulated) form.

Supercooling is usually undesirable as it can reduce the effective latent heat capacity of the organic phase change material.

When an effective nucleating agent is blended into the organic phase change material, supercooling is markedly reduced or eliminated. Preferably the nucleating agent is an organic material that is miscible with the organic phase change material at a temperature above the crystallization temperature of the organic phase change material and which exhibits a peak melting temperature at least 15°C and preferably at least 20°C higher than the peak melting temperature of the organic phase change material. The peak melting temperature is determined using a Differential Scanning Calorimeter (DSC) and when more than one melting peak is found, the peak melting temperature is determined from the largest peak. Suitable nucleating agents include those described in EP0623662 (Mitsubishi Paper Mills). The preferred nucleating agent is selected from a paraffin wax, fatty acid ester and fatty alcohol.

Paraffin waxes are particularly useful due to their effectiveness, cost and availability. Paraffin waxes with a peak melting temperature between 40°C and 80°C, often between 45°C and 75°C and most often between 50°C and 65°C are cost-effective and readily available. These are particularly effective nucleating agents when the organic phase change material is essentially a normal paraffin. The peak melting temperature of the paraffin nucleating agent should be at least 15°C and preferably at least 20°C higher than the peak melting temperature of the organic phase change material. To reduce or eliminate supercooling one or more nucleating agent(s) is/are desirably mixed with the organic phase change material at a concentration by weight of 0.5% to 30%, preferably 2% to 20%, and more preferably 5% to 15% of the total weight of PCM and nucleating agent. It is also possible to employ micro- or nanoparticles mixed into the phase change material as the nucleating agent e.g. nanoparticles of fumed silica, TiO₂ or other inorganic materials. In this case the micro/nanoparticle content (as a proportion of the total weight of nucleating agent particles including organic phase change material) tends to be 0.01% to 20%, preferably 0.05% to 10% and more preferably 0.1 % to 5%.

Hydroxides of magnesium and aluminium (Component B) and magnesia cements (Component C) such as magnesium oxychloride cement (also known as Sorel cement), magnesium phosphate cement and magnesium oxysulphate cement confer the benefit of improved fire retardancy to compositions containing particles of organic phase change materials. Furthermore, we find that the compositions provide an advantageous combination of fire retardancy with the ability to store and release heat and cold (thermal energy storage).

Magnesium hydroxide and aluminium hydroxide (also known as alumina trihydrate or ATH) suitable as Component B include those sold under the *Magnifin* and *Martinal* tradenames (magnesium hydroxide and aluminium hydroxide respectively) from Albermarle and *Ecomag* (magnesium hydroxide) from Premier Periclase. *Micral* & *Vertex* products from Huber are based on ATH and magnesium hydroxide respectively. Magnesium hydroxide may be prepared in-situ from suitably reactive magnesium oxide, particularly light burned magnesium oxide. In this case the oxide may be reacted with water in the formulation, including water associated with the particles of organic phase change material when provided as an aqueous dispersion of capsules. The Component B hydroxides are preferably fine in particle size to maximise homogeneity of the inventive composition and to provide maximum protective surface area for fire retardancy.

Particle size (d₅₀) of suitable hydroxides is typically 0.5 to 50 microns, preferably 0.5 to 10 microns and more preferably 0.5 to 5 microns, as quoted by suppliers such as Albermarle (laser diffraction technique using, for example, a Malvern Mastersizer S). When the hydroxide is supplied in the form of a dispersion in water (rather than a powder) then the use of a dispersant, such as a low molecular weight anionic acrylate homopolymer or copolymer, is beneficial to produce a flowable dispersion that has a maximum hydroxide content and minimum water content. A dispersant is useful as it also avoids or reduces agglomeration of hydroxide particles in the inventive compositions.

Component C is any of the materials known as magnesia cements. Magnesia cements are a group of cements formed from the hydration reaction involving magnesium oxide, one or more inorganic salts and water. Dr Mark A. Shand in his publication "Magnesia Cements" provides a useful overview of the three main types of magnesia cements and their properties.

Magnesium oxychloride cement, otherwise known as cement Sorel cement, is formed from magnesium oxide, magnesium chloride and water. Magnesium chloride is often used in the form of an aqueous solution to prepare cement mixes. Shand describes the main bonding phases found in hardened cement pastes and states that superior mechanical properties are obtained from the "5-form" whose formula is given as 5Mg(OH)₂.MgCl₂.8H₂O. According to Shand, this is formed using magnesium oxide, magnesium chloride and water in a molar ratio of 5:1:13. It is also suggested to use a slight excess of magnesium oxide and an amount of water sufficient to obtain the 5-form and to hydrate the excess magnesium oxide. It is therefore clear that a high concentration of the 5-form would be preferable in inventive compositions comprising Sorel cement where superior mechanical properties are needed.

The two other main magnesia cements are magnesium oxysulphate cement and magnesium phosphate cement. Magnesium oxysulphate cements are produced by reacting magnesium oxide, magnesium sulphate with water. Again, magnesium sulphate is often employed as an aqueous solution. Magnesium phosphate cements are formed from magnesium oxide, a water soluble phosphate (such as the mono- or dibasic ammonium or alkali metal salt) and water. Like with the other magnesia cements the salt component is most conveniently used in the form of an aqueous solution. Shand points out in his "Magnesia Cements" publication that magnesium phosphate cements are more resistant to the effects of water and freeze-thaw conditions compared to the two other main magnesia cement types.

A reactive form of magnesium oxide is most preferable in the preparation of Component C, such as those obtained from lower temperature calcining sometimes referred to as "light burned". As well as being reactive such materials offer the advantage of requiring lower energy for their production.

Preferably the composition comprises the organic phase change material particles (A) in an amount relative to either/both the magnesium hydroxide and /or aluminium hydroxide particles (B) and /or magnesia cement (C) in a ratio of 1:50 to 5:1, preferably 1:10 to 2:1 and more preferably 1:5 to 1:1. Component A is expressed as phase change material including any organic nucleating agent. Where both components B and C are present the ratio of B to C is between 1:9 to 9:1, preferably 1:3 to 3:1.

The latent heat capacity of the inventive compositions, expressed for the sum of the masses of components A, B and/or C in the composition (not including other materials that could be present), tends to range from 1 to 200J/g, often 5 to 150J/g and more often 10 to 100J/g.

The composition of the present invention can be in the form of a water based slurry or a water based paste comprising homogenously dispersed organic phase change material particles and magnesium hydroxide and/or aluminium hydroxide particles. Such compositions ideally comprise the organic phase change material particles and aluminium or magnesium hydroxide particles in the ratio desirable for their intended end-use. It is desirable for the composition to have a maximum content of dry solids and a minimum content of water, so as to minimize any difficulties arising from the presence of a high water content when preparing end products, such as the drying time and potential for shrinkage. The use of a dispersing agent has been found to be advantageous for preparing fluid and stable dispersions of hydroxide and organic phase change material particles. When in the form of a low viscosity slurry, some separation of the particles on storage may be acceptable provided that the slurry can be returned to a substantially homogenous state by stirring prior to being used.

According to the present invention the composition is suitable for use in imparting temperature regulation or storage of heat or cold in a variety of articles. Suitably the articles can be selected from the group consisting of fibres, foams, fabrics, heating and cooling devices and building materials.

Thus the present invention provides an article comprising a thermal energy storage composition having improved fire retardant properties, said heat storage composition comprising:
A) particles of organic phase change material (PCM) which organic phase change material is encapsulated within a shell in the form of capsule particles in which the volume mean diameter (VMD) of the capsule particles (when in the form of an aqueous dispersion) is between 0.2µm and 5µm, which are in intimate association with,
C) magnesia cement,
in which the particles of (A) organic phase change material are distributed uniformly throughout (C) magnesia cement
in which the particles of organic phase change material (A) are enclosed within the magnesia cement component (C) and are enclosed in a matrix of the magnesia cement (C).

In a more specific form of the invention the composition comprises
A) particles of organic phase change material (PCM), and
B) particles of fire retarding magnesium hydroxide and/or aluminium hydroxide, and
C) magnesia cement.

Preferably the articles include fibres, coated or impregnated woven or nonwoven fabrics, various building materials including bricks, blocks, boards, wall tiles (including ceramic, polyolefin, resin and rubber types), paving, ceiling materials (ceiling tiles etc), flooring (floor tiles, carpet etc), concrete articles, mortars, renders, plasters, cements, room furnishings etc. Also included are devices for cooling and/or heating. In such devices the fluid to be cooled or heated is circulated through the device such that the PCM component within the device absorbs or releases heat from/to the fluid. Examples of fluids include air and heat transfer fluids such as water.

The magnesia cement (Component C) compositions provide a fire retardant enveloping matrix for the organic phase change material particles. In addition to its fire retardant properties the magnesia cement can be used to produce strong solid articles by the cement binding together various solid components including phase change material particles. Further additives may be used to provide increased fire retardancy of inventive magnesia cement compositions. For example, antimony trioxide may be added to magnesia cements, particularly Sorel cement compositions.

The articles according to the invention may be prepared from the composition of the invention comprising A and C, or A and B and C. Alternatively the articles of the invention may be formed by incorporating the individual components A and C, or A and Band C in situ.

Hydroxide (B) may be formed in-situ from the reaction of precursor oxide with water added to the formulation, including water associated with the phase change material when in the form of a dispersion or emulsion.

Articles and compositions comprising magnesia cement (C) desirably require that magnesia cement (C) is prepared by first combining particles of organic phase change material (A) with the magnesia cement ingredients which includes magnesium oxide and water, The magnesia cement then sets to a suitable strength over a period of several hours or in some cases one or more days.

When articles/end products are building materials then they additionally may comprise cementitious materials e.g. based on Portland cement, gypsum, lime etc, fillers such as sand, aggregates, fibres, fly ash, bituminous materials etc and thermally conductivity materials to aid heat transfer etc.

Inventive articles generally comprise of at least 10% by weight of the inventive composition, preferably at least 30% and most preferably at least 50%.

For improved fire properties and thermal conductivity it is beneficial to minimize the air content of the final article as far as practicable. The degree of air entrapment may be gauged by reference to the density of articles, with higher density indicative of lower air content for otherwise similar or identical compositions.

The following examples are an illustration of the invention without it anyway intending to be limiting.

### Example 1

A disc of Sorel cement with PCM microcapsules evenly dispersed throughout is prepared from an aqueous dispersion of PCM microcapsules, magnesium oxide, magnesium chloride and water.

The PCM microcapsules are obtained as follows. An oil phase is prepared by mixing together 45:15:40 by weight methacrylic acid, methyl methacrylate and butanediol diacrylate monomers (271.7g) with homogenous molten core material composed of octadecane (1761.0g) and a paraffin with a peak melting temperature of about 55°C (142.8g). The oil phase is maintained just above the solidification temperature of the core material i.e. ~35°C to prevent any solidification of the core material. Lauroyl peroxide (thermal initiator) (2.7g) is added to the oil phase. The oil phase is homogenised into water (2742.2g) containing polyvinyl alcohol (Gohsenol GH20) (67.4g) and 2-acrylamido-2-methyl propane sulphonic acid as the sodium salt (4.0g) using a Silverson mixer (with fine shroud) for 5 minutes to form a stable emulsion. The emulsion is then transferred into a reactor with a stirrer, thermometer and gas bubbler connected to a nitrogen supply. The stirred emulsion is deoxygenated with nitrogen for 20 minutes. Throughout all of these initial steps (and until cooling at the end of the preparation process) the core material is maintained in a molten state.

The contents of the reactor are then heated to 60°C and maintained at this temperature for 2 hours after which the contents are heated to 80°C and then maintained for a further 1 hour at this temperature before being cooled and filtered. The resulting dispersion contains core-shell microcapsules with a core of 92.5% w/w octadecane and 7.5% w/w paraffin nucleating agent and a shell of highly cross-linked acrylic polymer, and whereby the microcapsules comprise about 87.5% w/w wax (octadecane and paraffin) and 12.5% w/w polymer. The dispersion has a solids content of typically 45% w/w when 1 gram is dried for 1 hour at 110°C and volume mean diameter of typically 2.0 microns determined using a Sympatec Helos laser diffraction system with an R1 lens (0.18-35µm) and Quixcel dispersion system. The dispersion has a latent heat capacity of typically 73J/g (average of melting transition and crystallization transition which are similar) and a peak melting temperature of typically 28.0°C and peak crystallization temperature of typically 22.5°C as determined by differential scanning calorimetry (DSC) using a Perkin-Elmer Pyris 1 from -10 to 50°C using a heating and cooling rate of 5°C/minute with sample weight of around 20mg. The microcapsule product is further analysed by Thermogravimetric Analysis (TGA) using a Perkin-Elmer TGA Pyris 1. An initial drying step at 110°C for 20 minutes is employed to remove water from the sample prior to analysis (such that only microcapsule mass loss is analysed). The analysis program is then run, heating the 10-15mg dry sample from 110°C to 500°C at 20°C/min. From this analysis the microcapsules exhibit a mass loss at 300°C of typically 5% and the temperature at 50% mass loss (Half Height) is typically 360°C.

A sample of magnesium oxide originating from MAF Magnesite (Holland) is used which is understood to have a d50 particle size of 15-20µm. Analysis of the magnesium oxide in water (with added surfactant) is carried out using a Sympatec Helos analyzer with an R4 lens and Quixcel dispersion system. The volume mean diameter is found to be 19.3 microns and the d50 is 15.8 microns. Magnesium chloride is used which is <325 mesh substantially anhydrous powder (<5% H₂0) obtained from Aldrich.

The Sorel cement disc is prepared as follows. A dispersion is formed by combining deionised water (17.07 grams), 45% w/w aqueous dispersion of PCM microcapsules (6.67 grams) and anhydrous magnesium chloride (8.43 grams). Care is taken due to the vigorous exothermic reaction when magnesium chloride is mixed with water. This dispersion is added gradually to magnesium oxide (17.84 grams). A spatula is used to stir the wet mixture until it is visibly smooth and homogenous. A circular aluminium dish (diameter 41.2mm and height 4.8mm) is completely filled with the freshly prepared wet mixture. The surface is completely covered with a plastic film which is held in place using a weight which helps to compress the mixture in the dish. The film also acts as a water barrier to prevent evaporation of water from the mixture, although it is unlikely that this step is essential to form a suitable cement. After about 3 days stored at room temperature the mixture is inspected and observed to be hard and suitably set. The disc that is removed from the aluminium dish is the same shape and dimensions as the dish and appears to be homogenous in that there are no visible signs of any agglomerated or separated material.

Samples are taken from the cement disc and analysed using a Perkin-Elmer Pyris 1 DSC from -10 to 50°C using a heating and cooling rate of 5°C/minute with sample weight of around 10mg. Results show that the disc exhibits a latent heat of 8.0 J/g (average of melting and crystallization transition) and a peak melting temperature of 28.0°C and peak crystallization temperature of 20.9°C.

The disc is held in a propane gas flame for several seconds. When removed from the flame there is no visible sign of the disc burning.

### Examples 2 (comparative) and 3 (comparative)

Compositions comprising microencapsulated PCM (mPCM) and gypsum plaster are prepared with and without aluminium trihydroxide (ATH) as follows. The mPCM used for the composition is provided in the form of an aqueous dispersion of microcapsules (hereafter described as "mPCM dispersion"), which comprises approximately 38% PCM and nucleating agent waxes. This is the same product that is used in Example 1. Gypsum plaster is "Teknicast Plaster" from BPB Formula and ATH is Martinal OL104 from Albermarle. The plaster and ATH dry powders are weighed out and mixed together followed by the addition of the required amount of mPCM dispersion to the powder mixture. A retarder, trisodium citrate dihydrate, as a solution in water, is also added to prevent premature setting of the mixture. The mixture is stirred using an electrical blender operating at a slow speed. Further water is added as required with further stirring to produce a completely homogenous wet mixture, which can be manually worked but is not free flowing. The wet mixture is packed into moulds including a plastic 10cm² square mould to a depth of approximately 1.5cm and the surface is smoothed using a pallet knife. The moulds are stored in the laboratory with the surface left uncovered. Inspection after approximately one day reveals that the material in the moulds is hard and dry. After several days the test pieces are removed from the moulds. The latent heat capacity is determined by taking a small sample from one of the test pieces which is then analysed by Differential Scanning Calorimetry using a Perkin-Elmer Pyris 1 DSC scanning between -10 and 50°C using a heating and cooling rate of 5°C/minute with sample weight of typically 10 to 25mg.

Two compositions are prepared and tested according to the above procedure. The ingredient amounts and latent heat values are shown in table 1.

**Table 1**

| | Example 2 (comparative) | Example 3 (comparative) |
|---|---|---|
| mPCM dispersion (grams) | 200.0 | 200.0 |
| ATH (grams) | - | 304.0 |
| Plaster (grams) | 345.6 | 89.4 |
| Deionised water (grams) | 149.2 | 192.7 |
| Trisodium citrate dihydrate (cm³ of 10% w/v solution) | 6.9 | 1.8 |
| Measured latent heat (J/g) | 26.4 | 26.7 |
| ATH/wax ratio | - | 4 |

A test is carried out whereby the face of the 10cm x 10cm x 1.5cm test piece is placed against a propane blow torch flame for 30 seconds. The test piece is then removed from the blow torch flame and the duration of any flame on the test piece is noted. It is found that the test piece from Example 3 maintains a flame for a much shorter time than the test piece from Example 2 (comparative).

### Example 4 (comparative)

Example 2 (comparative) and Example 3 procedure is followed except that Mg(OH)₂ is used in place of ATH. The Mg(OH)₂ is Martifin H5 from Albermarle. The ingredient amounts and latent heat value is given in table 2.

**Table 2**

| | Example 4 (comparative) |
|---|---|
| mPCM dispersion (grams) | 200.0 |
| Mg(OH)₂ (grams) | 152.0 |
| Plaster (grams) | 217.5 |
| Deionised water (grams) | 53.1 |
| Trisodium citrate dihydrate (cm³ of 10% w/v solution) | 4.4 |
| Measured latent heat (J/g) | 29.6 |
| Mg(OH)₂/wax ratio | 2 |

A test is carried out whereby the face of the 10cm x 10cm x 1.5cm test piece is placed against a propane blow torch flame for 30 seconds. The test piece is then removed from the blow torch flame and the duration of any flame on the test piece is noted. It is found that the test piece from Example 4 maintains a flame for a shorter time than the test piece from Example 2 (comparative).

### Examples 5 (comparative) and 6 (comparative)

Compositions comprising microencapsulated PCM (mPCM) and gypsum plaster are prepared with and without aluminium trihydroxide (ATH) as follows. The procedure in Example 2 (comparative) and Example 3 (comparative) is followed except that the mPCM used is in solid powder form (hereafter described as "mPCM powder"). The mPCM powder, which is dry and comprises approximately 85% is PCM and nucleating agent waxes, is produced from the mPCM emulsion used in the previous examples by a spray drying process.

Two compositions are prepared. The ingredient amounts and latent heat values are shown in table 3.

**Table 3**

| | Example 5 (comparative) | Example 6 (comparative) |
|---|---|---|
| mPCM powder (grams) | 95.5 | 95.5 |
| ATH (grams) | - | 322.7 |
| Plaster (grams) | 341.0 | 68.9 |
| Water (grams) | 255.7 | 51.7 |
| Trisodium citrate dihydrate (cm³ of 10% w/v solution) | 6.8 | 1.4 |
| Measured latent heat (J/g) | 25.7 | 26.2 |
| ATH/wax ratio | - | 4 |

A test is carried out whereby the face of the 10cm x 10cm x 1.5cm test piece is placed against a propane blow torch flame for 30 seconds. The test piece is then removed from the blow torch flame and the duration of any flame on the test piece is noted. It is found that the test piece from Example 6 (comparative) maintains a flame for a much shorter time than the test piece from Example 5 (comparative).

### Example 7 (comparative)

Example 5 (comparative) and Example 6 (comparative) procedure is followed except that Mg(OH)₂ is used in place of ATH. The Mg(OH)₂ is Martifin H5 from Albermarle. The ingredient amounts latent heat value is given in table 4.

**Table 4**

| | Example 7 (comparative) |
|---|---|
| mPCM powder (grams) | 95.5 |
| Mg(OH)₂ (grams) | 161.4 |
| Plaster (grams) | 204.9 |
| Water (grams) | 321.7 |
| Trisodium citrate dihydrate (cm³ of 10% w/v solution) | 4.1 |
| Measured latent heat (J/g) | 37.1 |
| Mg(OH)₂/wax ratio | 2 |

A test is carried out whereby the face of the 10cm x 10cm x 1.5cm test piece is placed against a propane blow torch flame for 30 seconds. The test piece is then removed from the blow torch flame and the duration of any flame on the test piece is noted. The test piece from Example 7 does not maintain a flame at all, much better than the test piece from Example 5 (comparative).

### Examples 8 (comparative) and 9 (comparative)

Two intermediate compositions are prepared using microencapsulated PCM (mPCM) and magnesium oxide (MgO) as follows. The mPCM used for the composition is provided in the form of an aqueous dispersion of microcapsules (hereafter described as "mPCM dispersion"), which comprise approximately 38% PCM and nucleating agent waxes. This is the same product that is used in Example 1. Magnesium oxide is Premier TechMag from Premier Periclase which comprises typically 94.0% MgO. The required amount of MgO is weighed into a suitable beaker and the specified amount of mPCM dispersion is weighed into another container. The mPCM is added slowly to the MgO and mixed together manually to form a uniform product. The mixture becomes more viscous, presumably as the MgO reacts with the water to form Mg(OH)₂. On stirring the product that is produced in one case is a viscous paste and in the other case is a granular powder. The intermediate products are then used to produce plaster compositions. The gypsum plaster used is 'Teknicast Plaster' from BPB Formula. The required amount of gypsum plaster and the intermediate product are weighed out and mixed together. The mixture is stirred using an electrical stirrer whilst adding water as required producing a homogenous wet mixture, which can be manually worked but is not free flowing. Retarder is not used. The wet mixture, whilst workable, is packed into a plastic 10cm² square mould to a depth of approximately 1.5cm and the surface is smoothed using a pallet knife. Smaller samples of the wet mixture are also taken. The mould is stored in the laboratory with the surface left uncovered. The smaller samples are also stored in the laboratory. Inspection after approximately 1 day reveals that the plaster material is hard and dry. After several days the test piece is removed from the mould. One of the small samples is used to determine the latent heat capacity of the plaster by Differential Scanning Calorimetry using a Perkin-Elmer Pyris 1 DSC scanning between -10 and 50°C using a heating and cooling rate of 5°C/minute with sample weight of typically 10 to 25mg.

The ingredient amounts and latent heat values are shown in table 5.

**Table 5**

| Intermediate Samples | Example 8 (comparative) | Example 9 (comparative) |
|---|---|---|
| MgO (grams) | 52.53 | 123.1 |
| mPCM dispersion (grams) | 100.0 | 100.0 |
| Mg(OH)₂/wax ratio | 2 | 4.7 |
| Physical form of intermediate | Viscous paste | Granular powder |

| Plaster samples | | |
|---|---|---|
| Intermediate (grams) | 43.5 | 64.0 |
| Plaster (grams) | 56.5 | 36.0 |
| Water (grams) | 34.3 | 35.0 |
| Measured latent heat (J/g) | 20.5 | 29.7 |

A test is carried out whereby the face of the 10cm x 10cm x 1.5cm test piece is placed against a propane blow torch flame for 30 seconds. The test piece is then removed from the blow torch flame and the duration of any flame on the test piece is noted. The test piece from Example 8 (comparative) maintains a flame for a very short time and the test piece from Example 9 (comparative) does not maintain a flame at all, both better than the results obtained with the test piece from Example 2 (comparative).

### Examples 10 & 11

Two Sorel cement compositions are prepared incorporating PCM (n-octadecane) microcapsules.

An aqueous phase is formed by combining MgCl₂.6H₂O crystals (from SERVA), microencapsulated PCM (mPCM) in the form of an aqueous dispersion (as used in Example 1), deionised water and Ciba^{®} Burst^{®} 5004 defoamer. The mixture is stirred to produce a homogenous mixture, visibly free of entrained air, and in which the magnesium chloride is completely dissolved. The aqueous phase is slowly added to Premier TechMag magnesium oxide powder (obtained from Premier Periclase and comprising typically 94.0% MgO). The mixture is stirred manually during and after the addition of the aqueous phase. The mixture is homogenized using a Greaves mixer with a dissolver stirrer to produce a paste which is smooth and mobile. For simplicity no fillers and/or aggregates and/or fibrous material is/are added. The paste is poured into a number of moulds, including a 10cm² dish filled to a depth of approximately 1.5cm. The moulds, with the surface faces open, are stored in the laboratory to allow the cement to set. After approximately six hours the moulds are inspected and the cement test pieces removed. The test pieces are very hard and strong, and appear homogenous in that there are no visible signs of separation or residue. The latent heat capacity of the cement is determined by analyzing a small sample (from one of the test pieces) several days after demoulding, by Differential Scanning Calorimetry (using a Perkin-Elmer Pyris 1 DSC scanning between -10 and 50°C using a heating and cooling rate of 5°C/minute with sample weight of typically 20 to 25mg).

Table 6 provides the amounts of the raw materials used to prepare the cements and the measured latent heat capacity values.

**Table 6**

| | Example 10 | Example 11 |
|---|---|---|
| Premier TechMag (MgO) (grams) | 283.9 | 268.1 |
| MgCl₂.6H₂0 (grams) | 269.2 | 254.2 |
| mPCM dispersion (grams) | 177.8 | 266.7 |
| Deionised water (grams) | 69.2 | 11.0 |
| Defoamer (grams) | 1.0 | 1.5 |
| Latent heat capacity (J/g) | 13.1 | 22.5 |

Two days after being removed from the moulds a test is carried out whereby the face of each 10cm x 10cm x 1.5cm test piece is placed against a propane blow torch flame for 30 seconds. The test piece is then removed from the blow torch flame and the duration of any flame on the test piece is noted. It is found that the test pieces from Example 10 and Example 11 do not maintain a flame.

### Examples 12 & 13

An emulsion is prepared as follows. An aqueous phase is first prepared by mixing together 22.5 grams of Tween 85 (sorbitan trioleate-20 mole polyethylene oxide emulsifier of HLB 11.0), 117.2 grams of Gohsenol GH-20 (polyvinyl alcohol produced by Nippon Gohsei used as a 9.6% w/w solution in water) and 135.3 grams of deionised water. The aqueous phase is heated to approximately 35°C. 225 grams of n-octadecane, the PCM, in liquid form at approximately 35°C, is added to the aqueous phase as it is sheared using a Silverson homogenizer fitted with a fine shroud. The emulsion is further sheared for approximately 8 minutes at the maximum Silverson speed setting after the addition of octadecane. The emulsion is cooled to approximately 30°C and is further sheared at the maximum Silverson speed setting for 1 minute. The resulting emulsion of 45% octadecane in water is cooled to approximately 20°C using an ice/water bath. The emulsion is fluid and stable. The mean volume diameter of the emulsion is found to be 1.15 microns and the X100 value is found to be 2.5 microns by analysis using a Sympatec particle size analyzer employing a Quixcel dispersion system and R1 lens.

Shortly after the emulsion is prepared it is used to prepare test pieces based on two Sorel cement compositions prepared according to the following procedure. Octadecane emulsion is added to MgCl₂.6H₂O in flake form (from Stan Chem International Ltd (UK) and comprising typically 47.3% MgCl₂ and 50.5% water). The mixture is stirred for several minutes to allow the MgCl₂.6H₂O flakes to completely dissolve. The emulsion, now containing dissolved MgCl₂, remains stable. To this emulsion is added Floormag M100 (from Van Mannekus & Co. B.V. (Netherlands) and comprising typically 90.0% MgO). The mixture is stirred during and after the addition of the Floormag powder. The mixture is homogenized using a Greaves mixer with a dissolver stirrer to produce a paste which is smooth and mobile. For simplicity no fillers and/or aggregates and/or fibrous material is/are added. The paste is poured into a number of moulds, including a 10cm² dish filled to a depth of approximately 1.5cm. The moulds, with the surface faces open, are stored in the laboratory to allow the cement set. After approximately one day the moulds are inspected and the cement test pieces removed. The test pieces are very hard and strong and are observed to be dry and homogenous in that there are no visible signs of separation and the surfaces are free of wax or oil residue. The latent heat capacity of the cement is determined by analyzing a small sample (from one of the test pieces) several days after demoulding, by Differential Scanning Calorimetry (using a Perkin-Elmer Pyris 1 DSC scanning between -10 and 50°C using a heating and cooling rate of 5°C/minute with sample weight of typically 15 to 20mg).

Table 7 provides the amounts of the raw materials used to prepare the cements and the measured latent heat capacity values.

**Table 7**

| | Example 12 | Example 13 |
|---|---|---|
| Floormag M100 (MgO) (grams) | 272.5 | 250.7 |
| MgCl₂.6H₂O flakes (grams) | 172.9 | 159.0 |
| Octadecane (PCM) emulsion (grams) | 186.7 | 280.0 |
| Deionised water (grams) | 67.9 | 10.3 |
| PCM content (% w/w) | 12.0 | 18.0 |
| Latent heat capacity (J/g) | 21.4 | 32.9 |

Two days after being removed from the moulds a test is carried out whereby the face of each 10cm x 10cm x 1.5cm test piece is placed against a propane blow torch flame for 30 seconds. The test piece is then removed from the blow torch flame and the duration of any flame on the test piece is noted. The test piece from Example 12 does not maintain a flame and the test piece from Example 13 holds a flame for a short time before extinguishing. It is also noted that a small amount of unidentified liquid is exuded from Example 12 test piece during the test.

## Claims

1. A thermal energy storage composition having improved fire retardant properties comprising:
A) particles of organic phase change material (PCM) which organic phase change material is encapsulated within a shell in the form of capsule particles, in which the volume mean diameter (VMD) of the capsule particles (when in the form of an aqueous dispersion) is between 0.2µm and 5µm,
and
C) magnesia cement,
in which the particles of (A) organic phase change material are distributed uniformly throughout (C) magnesia cement,
in which the particles of organic phase change material (A) are enclosed within the magnesia cement component (C) and are enclosed in a matrix of the magnesia cement (C).

2. A composition according to claim 1 comprising:
A) particles of organic phase change material (PCM), and
B) particles of fire retarding magnesium hydroxide and/or aluminium hydroxide, and
C) magnesia cement.

3. A composition according to claim 1 or claim 2 in which the phase change material is an organic, water insoluble substance that undergoes phase changes from solid to liquid and/or liquid to solid at temperatures of between 0 and 80°C.

4. A composition according to any preceding claim in which the organic phase change material is encapsulated within a shell and in the form of capsule particles, said capsule particles being in direct contact with particles of (B) magnesium hydroxide and/or aluminium hydroxide and/or (C) magnesia cement.

5. A composition according to any preceding claim in which the ratio of phase change material particles (A) to magnesia cement (C) is 1:50 to 5:1, preferably 1:10 to 2:1 and more preferably 1:5 to 1:1.

6. A process of obtaining a thermal energy storage composition having improved fire retardant properties comprising:
A) particles of organic phase change material (PCM) which organic phase change material is encapsulated within a shell in the form of capsule particles in which the volume mean diameter (VMD) of the capsule particles (when in the form of an aqueous dispersion) is between 0.2µm and 5µm,
which are in intimate association with
C) magnesia cement,
in which the particles of (A) organic phase change material are distributed uniformly throughout (C) magnesia cement,
in which the particles of organic phase change material (A) are enclosed within the magnesia cement component (C) and are enclosed in a matrix of the magnesia cement (C),
comprising the steps of,
I) providing the particles of organic phase change material (A) as an aqueous emulsion, aqueous dispersion, aqueous paste, or dry powder,
II) combining component (A) provided in step (I) with the ingredients required to form the magnesia cement (C).

7. Use of the composition according to any of claims 1 to 5 for imparting temperature regulation or storage of heat or cold in an article selected from the group consisting of fibres, fabrics, foams, heating and cooling devices and building materials.

8. An article comprising a thermal energy storage composition having improved fire retardant properties, said heat storage composition comprising:
A) particles of organic phase change material (PCM) which organic phase change material is encapsulated within a shell in the form of capsule particles in which the volume mean diameter (VMD) of the capsule particles (when in the form of an aqueous dispersion) is between 0.2µm and 5µm,
which are in intimate association with
C) magnesia cement,
in which the particles of (A) organic phase change material are distributed uniformly throughout (C) magnesia cement,
in which the particles of organic phase change material (A) are enclosed within the magnesia cement component (C) and are enclosed in a matrix of the magnesia cement (C).

## Patentansprüche

1. Wärmeenergiespeicherzusammensetzung mit verbesserten Flammschutzeigenschaften, umfassend:
A) Teilchen aus organischem Phasenwechselmaterial (phase change material, PCM), wobei das organische Phasenwechselmaterial in einer Schale in Form von Kapselteilchen verkapselt ist, wobei der volumenmittlere Durchmesser (VMD) der Kapselteilchen (wenn sie in Form einer wässrigen Dispersion vorliegen) zwischen 0,2 µm und 5 µm liegt,
und
C) Magnesiazement,
wobei die Teilchen aus (A) organischem Phasenwechselmaterial einheitlich in (C) Magnesiazement verteilt sind,
wobei die Teilchen aus organischem Phasenwechselmaterial (A) in der Magnesiazement-Komponente (C) eingeschlossen sind und in einer Matrix aus dem Magnesiazement (C) eingeschlossen sind.

2. Zusammensetzung nach Anspruch 1, umfassend:
A) Teilchen aus organischem Phasenwechselmaterial (PCM) und
B) Teilchen aus flammhemmendem Magnesiumhydroxid und/oder Aluminiumhydroxid und
C) Magnesiazement.

3. Zusammensetzung nach Anspruch 1 oder Anspruch 2, wobei es sich bei dem Phasenwechselmaterial um eine organische, wasserunlösliche Substanz handelt, die bei Temperaturen zwischen 0 und 80°C Phasenwechsel von fest nach flüssig und/oder flüssig nach fest durchläuft.

4. Zusammensetzung nach einem der vorhergehenden Ansprüche, bei der das organische Phasenwechselmaterial in einer Schale und in Form von Kapselteilchen verkapselt ist, wobei die Kapselteilchen in direktem Kontakt mit Teilchen aus (B) Magnesiumhydroxid und/oder Aluminiumhydroxid und/(C) Magnesiazement stehen.

5. Zusammensetzung nach einem der vorhergehenden Ansprüche, wobei das Verhältnis von Phasenwechselmaterialteilchen (A) zu Magnesiazement (C) 1:50 bis 5:1, vorzugsweise 1:10 bis 2:1 und weiter bevorzugt 1:5 bis 1:1 beträgt.

6. Verfahren zum Erhalt einer Wärmeenergiespeicherzusammensetzung mit verbesserten Flammschutzeigenschaften, umfassend:
A) Teilchen aus organischem Phasenwechselmaterial (PCM), wobei das organische Phasenwechselmaterial in einer Schale in Form von Kapselteilchen verkapselt ist, wobei der volumenmittlere Durchmesser (VMD) der Kapselteilchen (wenn sie in Form einer wässrigen Dispersion vorliegen) zwischen 0,2 µm und 5 µm liegt,
die in inniger Assoziation mit
C) Magnesiazement
vorliegen,
wobei die Teilchen aus (A) organischem Phasenwechselmaterial einheitlich in (C) Magnesiazement verteilt sind,
wobei die Teilchen aus organischem Phasenwechselmaterial (A) in der Magnesiazement-Komponente (C) eingeschlossen sind und in einer Matrix aus dem Magnesiazement (C) eingeschlossen sind,
bei dem man
I) die Teilchen aus organischem Phasenwechselmaterial (A) in Form einer wässrigen Emulsion, einer wässrigen Dispersion, einer wässrigen Paste oder eines trockenen Pulvers bereitstellt,
II) die in Schritt (I) bereitgestellte Komponente (A) mit den zur Bildung des Magnesiazements (C) erforderlichen Bestandteilen kombiniert.

7. Verwendung der Zusammensetzung nach einem der Ansprüche 1 bis 5 zur Temperaturregulierung oder Speicherung von Wärme oder Kälte in einem Gegenstand aus der Gruppe bestehend aus Fasern, textilen Flächengebilden, Schaumstoffen, Erwärmungs- und Abkühlungsvorrichtungen und Baustoffen.

8. Gegenstand, umfassend eine Wärmeenergiespeicherzusammensetzung mit verbesserten Flammschutzeigenschaften, wobei die Wärmespeicherzusammensetzung Folgendes umfasst:
A) Teilchen aus organischem Phasenwechselmaterial (PCM), wobei das organische Phasenwechselmaterial in einer Schale in Form von Kapselteilchen verkapselt ist, wobei der volumenmittlere Durchmesser (VMD) der Kapselteilchen (wenn sie in Form einer wässrigen Dispersion vorliegen) zwischen 0,2 µm und 5 µm liegt,
die in inniger Assoziation mit
C) Magnesiazement vorliegen,
wobei die Teilchen aus (A) organischem Phasenwechselmaterial einheitlich in (C) Magnesiazement verteilt sind,
wobei die Teilchen aus organischem Phasenwechselmaterial (A) in der Magnesiazement-Komponente (C) eingeschlossen sind und in einer Matrix aus dem Magnesiazement (C) eingeschlossen sind.

## Revendications

1. Composition de stockage d'énergie thermique présentant des propriétés ignifuges améliorées, comprenant :
A) des particules d'un matériau à changement de phase organique (PCM), ledit matériau à changement de phase organique étant encapsulé dans une enveloppe sous la forme de particules capsules, le diamètre moyen en volume (VMD) des particules capsules (lorsqu'elles se trouvent sous la forme d'une dispersion aqueuse) étant compris entre 0,2 µm et 5 µm,
et
C) du ciment de magnésie,
les particules du matériau à changement de phase organique (A) étant distribuées uniformément dans le ciment de magnésie (C),
les particules du matériau à changement de phase organique (A) étant enfermées dans le composant ciment de magnésie (C) et étant enfermées dans une matrice du ciment de magnésie (C).

2. Composition selon la revendication 1, comprenant :
A) des particules d'un matériau à changement de phase organique (PCM) et
B) des particules d'un hydroxyde de magnésium et/ou hydroxyde d'aluminium ignifuge et
C) du ciment de magnésie.

3. Composition selon la revendication 1 ou la revendication 2, dans laquelle le matériau à changement de phase est une substance organique insoluble dans l'eau qui subit des changements de phase de solide à liquide et/ou de liquide à solide à des températures comprises entre 0 et 80 °C.

4. Composition selon l'une quelconque des revendications précédentes, dans laquelle le matériau à changement de phase organique est encapsulé dans une enveloppe et sous la forme de particules capsules, lesdites particules capsules étant en contact direct avec les particules d'hydroxyde de magnésium et/ou d'hydroxyde d'aluminium (B) et/ou le ciment de magnésie (C).

5. Composition selon l'une quelconque des revendications précédentes, dans laquelle le rapport entre les particules de matériau à changement de phase (A) et le ciment de magnésie (C) est de 1:50 à 5:1, de préférence de 1:10 à 2:1 et de manière davantage préférée de 1:5 à 1:1.

6. Procédé d'obtention d'une composition de stockage d'énergie thermique présentant des propriétés ignifuges améliorées, comprenant :
A) des particules d'un matériau à changement de phase organique (PCM), ledit matériau à changement de phase organique étant encapsulé dans une enveloppe sous la forme de particules capsules, le diamètre moyen en volume (VMD) des particules capsules (lorsqu'elles se trouvent sous la forme d'une dispersion aqueuse) étant compris entre 0,2 µm et 5 µm,
qui sont en association intime avec
C) du ciment de magnésie,
les particules du matériau à changement de phase organique (A) étant distribuées uniformément dans le ciment de magnésie (C),
les particules du matériau à changement de phase organique (A) étant enfermées dans le composant ciment de magnésie (C) et étant enfermées dans une matrice du ciment de magnésie (C),
comprenant les étapes suivante
I) la préparation des particules du matériau à changement de phase organique (A) sous la forme d'une émulsion aqueuse, d'une dispersion aqueuse, d'une pâte aqueuse ou d'une poudre sèche,
II) la combinaison du composant (A) préparé à l'étape (I) avec les ingrédients requis pour former le ciment de magnésie (C).

7. Utilisation de la composition selon l'une quelconque des revendications 1 à 5 pour conférer une régulation de la température ou un stockage de la chaleur ou du froid à un article choisi dans le groupe constitué par les fibres, les tissus, les mousses, les dispositifs chauffants et réfrigérants, et les matériaux de construction.

8. Article comprenant une composition de stockage d'énergie thermique présentant des propriétés ignifuges améliorées, ladite composition de stockage thermique comprenant :
A) des particules d'un matériau à changement de phase organique (PCM), ledit matériau à changement de phase organique étant encapsulé dans une enveloppe sous la forme de particules capsules, le diamètre moyen en volume (VMD) des particules capsules (lorsqu'elles se trouvent sous la forme d'une dispersion aqueuse) étant compris entre 0,2 µm et 5 µm,
qui sont en association intime avec
C) du ciment de magnésie,
les particules du matériau à changement de phase organique (A) étant distribuées uniformément dans le ciment de magnésie (C),
les particules du matériau à changement de phase organique (A) étant enfermées dans le composant ciment de magnésie (C) et étant enfermées dans une matrice du ciment de magnésie (C).
